(19) Europäisches Patentamt
European Patent Office
Office européen des brevets

(11) **EP 2 003 475 A2**

(12) **EUROPEAN PATENT APPLICATION**

(43) Date of publication:
**17.12.2008 Bulletin 2008/51**

(51) Int Cl.:
**G02B 6/00** *(2006.01)*    **F21V 8/00** *(2006.01)*

(21) Application number: **08158254.6**

(22) Date of filing: **13.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **13.06.2007  US 762089**

(71) Applicant: **Rohm and Haas Denmark Finance A/S 2100 Copenhagen (DK)**

(72) Inventors:
• **MI, Xiang-Dong**
  **Rochester, NY 14623 (US)**
• **Greener, Jehuda**
  **Rochester, NY 14618 (US)**

(74) Representative: **Kent, Venetia Katherine**
  **Rohm and Haas Europe Services ApS - UK Branch**
  **European Patent Department**
  **4th Floor, 22 Tudor Street**
  **London EC4Y 0AY (GB)**

(54) **Light redirecting device**

(57)    A light redirecting article for redirecting light toward comprises: a light exit surface with features meeting certain requirements;
wherein first and second surfaces of the features are opposed to each other at an angle $\alpha$ that is in the range from 35 to 55 degrees;
wherein the light redirecting article is formed from a material having an index of refraction less than 1.60; and
wherein the target angle is from 5 to 25 degrees.

**FIG. 4**

**Description**

**FIELD OF THE INVENTION**

This invention generally relates to display illumination articles for enhancing luminance from a surface and more particularly relates to a turning film and process that redirects light from a light guiding plate and provides polarized light output.

**BACKGROUND OF THE INVENTION**

Liquid crystal displays (LCDs) continue to improve in cost and performance, becoming a preferred display type for many computer, instrumentation, and entertainment applications. The transmissive LCD used in conventional laptop computer displays is a type of backlit display, having a light providing surface positioned behind the LCD for directing light outwards, towards the LCD. The challenge of providing a suitable backlight apparatus having brightness that is sufficiently uniform while remaining compact and low cost has been addressed following one of two basic approaches. In the first approach, a light-providing surface is used to provide a highly scattered, essentially Lambertian light distribution, having an essentially constant luminance over a broad range of angles. Following this first approach, with the goal of increasing on-axis and near-axis luminance, a number of brightness enhancement films have been proposed for redirecting a portion of this light having Lambertian distribution in order to provide a more collimated illumination. Among proposed solutions for brightness enhancement films are those described in U.S. Patent No. 5,592,332 (Nishio et al.); U.S. Patent No. 6,111,696 (Allen et al); and U.S. Patent No. 6,280,063 (Fong et al.), for example. Solutions such as the brightness enhancement film (BEF) described in patents cited above provide some measure of increased brightness over wide viewing angles. However, overall contrast, even with a BEF, remains relatively poor.

A second approach to providing backlight illumination employs a light guiding plate (LGP) that accepts incident light from a lamp or other light source disposed at the side and guides this light internally using Total Internal Reflection (TIR) so that light is emitted from the LGP over a narrow range of angles. The output light from the LGP is typically at a fairly steep angle with respect to normal, such as 70 degrees or more. With this second approach, a turning film, one type of light redirecting article, is then used to redirect the emitted light output from the LGP toward normal. Directional turning films, broadly termed light-redirecting articles or light-redirecting films, such as that provided with the HSOT (Highly Scattering Optical Transmission) light guide panel available from Clarex, Inc., Baldwin, NY, provide an improved solution for providing a uniform backlight of this type, without the need for diffusion films or for dot printing in manufacture. HSOT light guide panels and other types of directional turning films use arrays of prism structures, in various combinations, to redirect light from a light guiding plate toward normal, or toward some other suitable target angle that is typically near normal relative to the two-dimensional surface. As one example, U.S. Patent No. 6,746,130 (Ohkawa) describes a light control sheet that acts as a turning film for LGP illumination.

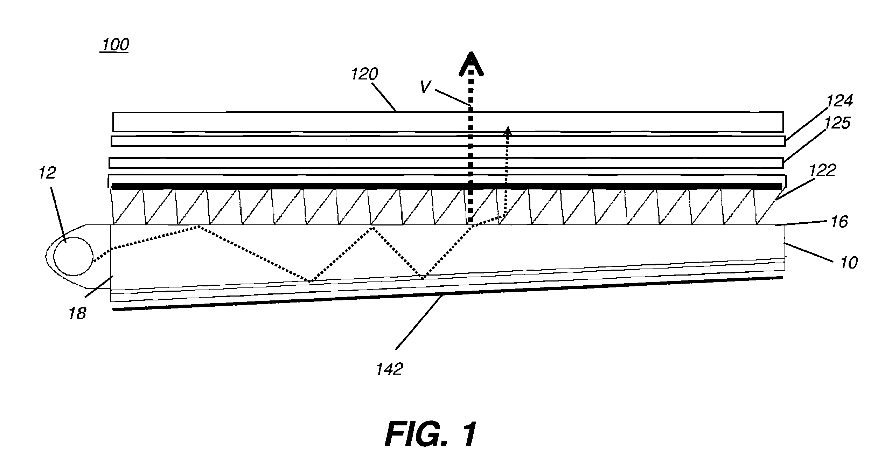

Referring to Figure 1, the overall function of a light guiding plate 10 in a display apparatus 100 is shown. Light from a light source 12 is incident at an input surface 18 and passes into light guiding plate 10, which is typically wedge-shaped as shown. The light propagates within light guiding plate 10 until Total Internal Reflection (TIR) conditions are frustrated and then, possibly reflected from a reflective surface 142, exits light guiding plate at an output surface 16. This light then goes to a turning film 122 and is directed to illuminate a light-gating device 120 such as an LCD or other type of spatial light modulator or other two-dimensional backlit component that modulates the light. For optimized viewing under most conditions, the emitted light should be provided over a range of relatively narrow angles about a normal V. A polarizer 124 is typically disposed in the illumination path in order to provide light-gating device 120 with suitably polarized light for modulation. However, since light after passing through turning film 122 is essentially unpolarized, or has at most some small degree of polarization, the polarizer 124 may need to absorb about half of the light. In order to overcome this problem, a reflective polarizer 125 is often provided between absorptive polarizer 124 and turning film 122. One type of reflective polarizer is disclosed in U.S. Patents Nos. 5,982,540 and 6,172,809 entitled "Surface light source device with polarization function" to Koike et al.

Clearly, there would be advantages to reducing the overall number of components needed to provide polarized illumination without compromising image quality and performance. With this goal in mind, there have been a number of solutions proposed for simplifying the structure of polarizer 125 or eliminating this component as a separate unit by combining functions. In an attempt to combine functions, U.S. Patent No. 6,027,220 entitled "Surface Light Source Device Outputting Polarized Frontal Illumination Light" to Arai discloses a surface light source device capable of producing illumination that is at least partially polarized. As the Arai '220 disclosure shows, there is inherently some polarization of light that emerges from light guiding plate 10 (Figure 1). In addition, there is further polarization of this light inherently performed by the turning film. In a configuration that employs a pair of turning films, there can be even further slight gains in polarization. Following the approach of the Arai '220 disclosure, a surface light source can be designed that provides some degree of polarization simply by using suitable materials for each turning film and matching these materials, according to their index of refraction *n,* to the angle of inclination of light from the light guiding plate. While this approach has merit for providing some measure of polarization, however, there are practical limits to how much improvement can be gained based on simply specifying an index of refraction n. Moreover, embodiments utilizing multiple turning films add cost, thickness, and complexity to the illumination system design.

In yet another approach, U.S. Patent No. 6,079,841 entitled "Apparatus for Increasing a Polarization Component, Light Guide Unit, Liquid Crystal Display and Polarization Method" to Suzuki, provides a light guiding plate that is itself designed to deliver polarized light. The Suzuki '841 light guiding plate utilizes a stack of light guides laminated together and oriented to provide Brewster's angle conditioning of the light to achieve a preferred polarization state. While this method has the advantage of incorporating polarization components within the light guide itself, there are disadvantages to this type of approach. The complexity of the light guide plate and the added requirement for a half-wave or quarter-wave plate and reflector negates the advantage gained by eliminating the polarizer as a separate component in the illumination path.

Commonly assigned U.S. Patent No. 7,139,125 entitled "Polarizing Turning Film Using Total Internal Reflection" to Mi describes a polarizing turning film that provides suitable polarized light output at near normal angles and that can be used in either of two orientations, depending on the range of angles of light from its corresponding light guide plate or other directional device. In order to achieve this goal, the film of the Mi '125 disclosure employs materials having relatively high indices of refraction n, such as where n exceeds 1.60.

While polarizing turning films can help to provide at least some of the polarization needed for an LCD panel, cost factors and availability of suitable materials can be concerns. Moreover, not all types of LCDs require that the light provided be highly polarized. One type of LC device that is widely used, the Twisted Nematic (TN) LC device, is less sensitive to polarization. With apparatus using this type of light modulator, there is less need for a turning film that provides polarization and increasing interest in providing a turning film with lower cost materials that may have lower indices of refraction. It is also recognized that, for many types of display applications, output light need not necessarily be at normal angles, but may actually provide better visibility when it is directed at some inclination away from normal. For example, avionics and automotive displays, and other types of displays, including point-of-sale displays, gaming displays, and some desktop displays for data entry and review, are often viewed at angles other than normal.

Thus, it can be seen that, while there have been solutions proposed for turning films suitable for some types of display apparatus and applications, there remains a need for a turning film for directing light over a range of angles inclined from normal that may be fabricated from lower cost optical materials having useful values for indices of refraction.

## SUMMARY OF THE INVENTION

The present invention provides a light-redirecting article for redirecting light toward a target angle, the light redirecting article comprising:

(a) an input surface for accepting incident illumination over a range of incident angles;
(b) an output surface comprising a plurality of light redirecting structures each light redirecting structure having

(i) an exit surface sloping away from normal in one direction as defined by a first base angle $\beta1$ relative to the input surface, and
(ii) a second surface sloping away from normal, in the opposite direction relative to the exit surface, as defined by a second base angle $\beta2$ relative to the input surface,

wherein first and second surfaces are opposed to each other at an angle $\alpha$ that is in the range from 35 to 55 degrees, wherein the light redirecting article is formed from a material having an index of refraction less than 1.60, and wherein the target angle $\theta_{out}$ is in the range from 5 to 25 degrees.

The invention also provides a display apparatus and a process for redirecting light.

It is an advantage of the present invention that it provides a turning film for directing light over a range of angles inclined from normal. The turning film of the present invention can be fabricated from lower cost optical materials having standard values for indices of refraction.

## BRIEF DESCRIPTION OF THE DRAWINGS

While the specification concludes with claims particularly pointing out and distinctly claiming the subject matter of the present invention, it is believed that the invention will be better understood from the following description when taken in conjunction with the accompanying drawings, wherein:

Figure 1 is a cross sectional view showing components of a conventional display apparatus;

Figure 2A is a schematic cross-sectional view showing a turning film with prismatic structure facing downward, toward the light guiding plate, generally corresponding to Figure 2 of U.S. Patent No. 6,027,220;

Figure 2B is a schematic cross-sectional view showing a turning film with prismatic structure facing upward, corresponding to Figure 8 or Figure 9 of U.S. Patent No. 6,027,220 when β2=52.3°, β1=75°, and n=1.58, or when β2=55.7°, β1=71.1°, and n=1.58;

Figure 2C is a schematic cross-sectional view showing a polarizing turning film with prismatic structure facing upward, corresponding to Figure 2B of U.S. Patent No. 7,139,125 having a refractive index n>1.6;

Figure 3 is a schematic cross-sectional view showing a turning film for producing light at an angle that is inclined from normal according to the present invention;

Figure 4 is a schematic cross-sectional view showing a turning film that produces output light at an angle that is inclined from normal, where the light from the light guiding plate encounters two surfaces, according to the present invention;

Figure 5A is a schematic cross-sectional view showing a turning film of the present invention wherein the substrate and the prisms have different refractive indices;

Figure 5B is a schematic cross-sectional view showing the turning film of Figure 5A, where the tips of the prisms are truncated and/or the groove angle is rounded;

Figure 5C is a schematic cross-sectional view showing the turning film of Figure 5A, where one surface of the prisms is curved or has two or more segments;

Figure 5D is a schematic cross-sectional view showing the turning film of Figure 4, where the substrate and the prisms have different refractive indices, the light from the light guiding plate encounters two surfaces, and one surface of the prisms is curved or has two or more segments;

Figure 6 is a schematic cross-sectional view showing a turning film in an LCD display system;

Figure 7A is a schematic top view showing an LCD with a pair of polarizers oriented at 45 degrees relative to the grooves of the light redirecting structure of the turning film;

Figure 7B is a schematic top view showing an LCD with a pair of polarizers oriented at parallel or perpendicular to the grooves of the light redirecting structure of the turning film;

Figure 7C is a schematic top view showing a turning film with arcuate grooves; and,

Figures 8A-8H are graphs showing the relationship of light intensity to output angle at various refractive indices for various comparative and inventive embodiments;

Figures 9A and 9B are perspective views showing a turning film usable in either of two positions, according to one embodiment; and

Figures 10A and 10B are tables that list values for various embodiments shown in the graphs of Figures 8A-8H.

## DETAILED DESCRIPTION OF THE INVENTION

The present description is directed in particular to elements forming part of, or cooperating more directly with, apparatus in accordance with the invention. It is to be understood that elements not specifically shown or described may take various forms well known to those skilled in the art.

The apparatus of the present invention uses light-redirecting structures that are generally shaped as prisms. True prisms have at least two planar faces. Because, however, one or more surfaces of the light-redirecting structures need not be planar in all embodiments, but may be curved or have multiple sections, the more general term "light redirecting structure" is used in this specification.

As noted in the background material given earlier, the conventional turning film redirects light received at an oblique angle of incidence, typically 60 degrees or more from normal, from a light guiding plate or a similar light-providing component. The turning film typically employs an array of refractive structures, typically prism-shaped and of various dimensions, to redirect light from the light guiding plate toward normal. Because these are provided as films, normal (V) is considered relative to the two-dimensional plane of the film surface.

As was shown with reference to Figure 1, light source 12 is placed at the side of light guiding plate 10. This positioning and the design of light guiding plate 10 dictate the needed angular behavior and design layout of turning films. For a range of light guiding plate 10 performance conditions, the light redirecting article of the present invention can be used to replace conventional turning film 122 in the Figure 1 arrangement.

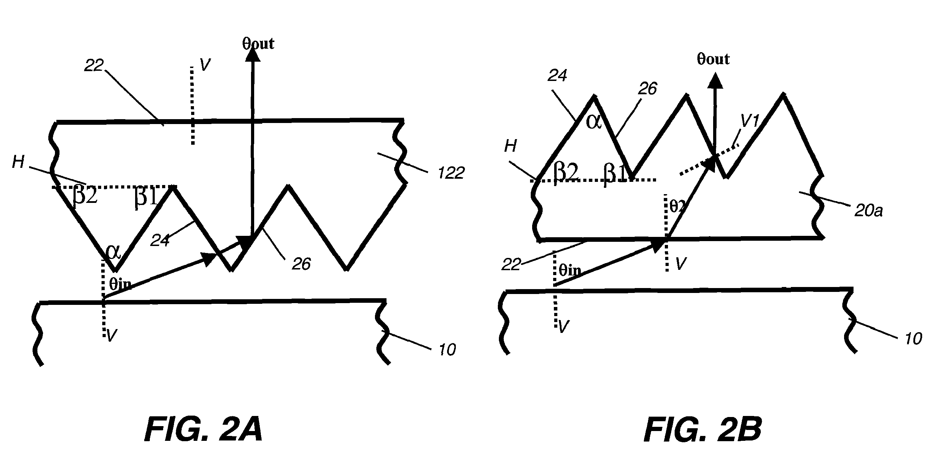

Referring to Figure 2A, there is shown, as a comparative example, a schematic cross-sectional view of conventional turning film 122 used with light guiding plate 10, showing key angles and geometric relationships. Turning film 122 has a number of prismatic structures facing downward toward light guiding plate 10, each structure having a near surface 24 (being near relative to light source 12, as shown in the embodiment of Figure 1) and a far surface 26, both sides slanted from a film normal direction V as determined by an apex angle α, and base angles β1 and β2, relative to a horizontal H. Light from light guiding plate 10 is incident over a small range of angles about a central principal ray input

angle $\theta_{in}$. The principal ray output angle $\theta_{out}$ of light delivered to the LC display element at a flat surface 22 of turning film 122 is determined by a number of factors including the central input angle $\theta_{in}$, the refractive index n of turning film 122, and the base angle β1 at which far surface 26 is slanted. Output angle $\theta_{out}$ for emitted light is preferably normal with respect to turning film 122, however output angle $\theta_{out}$ can be considered a target angle, which may be at some inclination with respect to normal for some applications. For most conventional turning films, the target angle is normal.

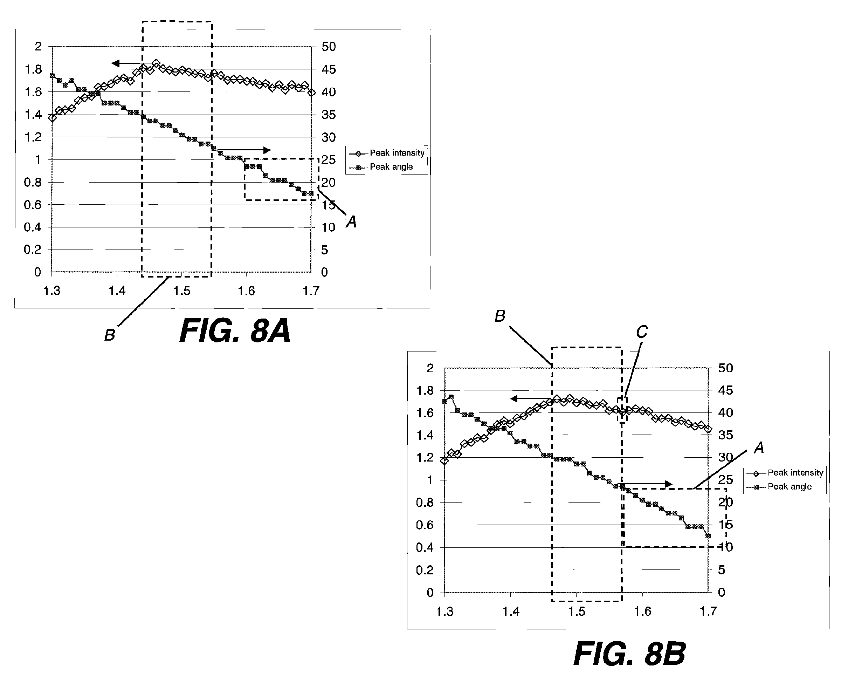

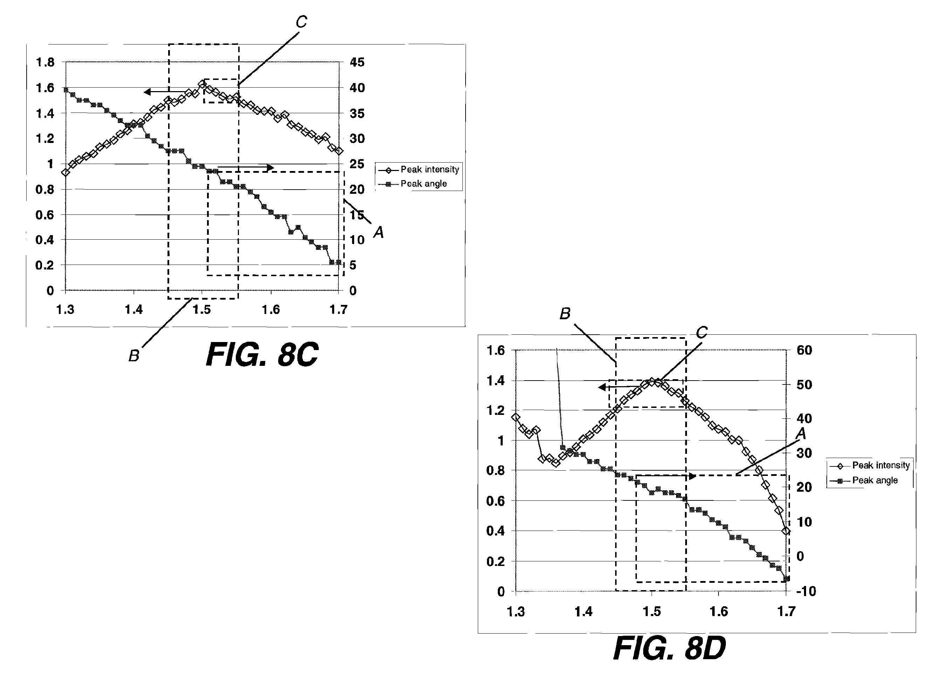

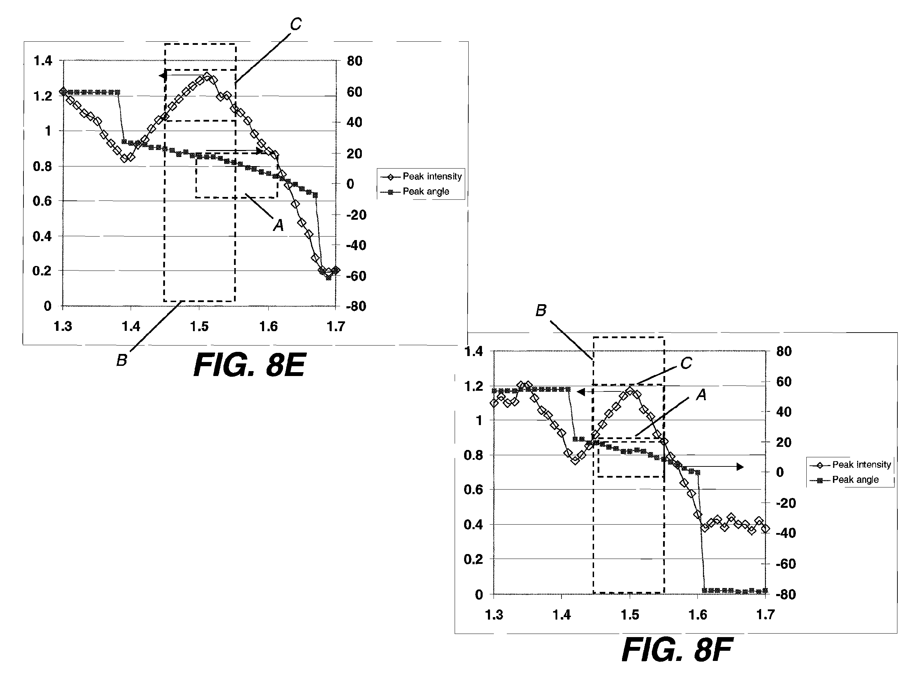

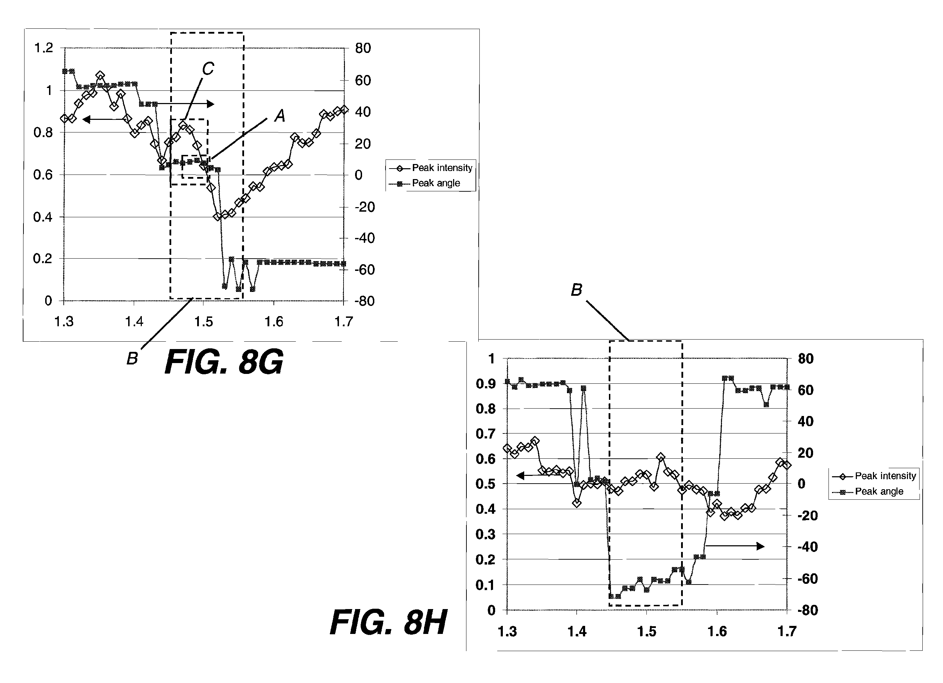

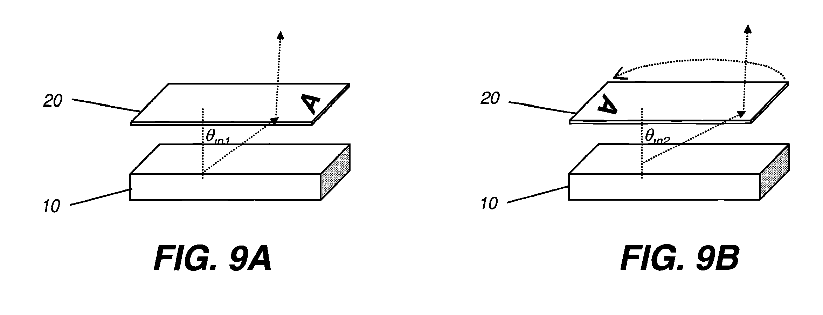

Figure 2B shows a different arrangement of a turning film 20a in which prismatic structures face upwards, toward the LC device or other light modulator. Flat surface 22 is now the input surface; the structured surface is the output surface. In this configuration, the basic pattern used for the present invention, each light redirecting structure on the output surface again has near surface 24 (being near relative to light source 12, as shown in the embodiment of Figure 1) and far surface 26, both sides obliquely slanted from a film normal direction V as determined by apex angle α, and base angles β1 and β2, relative to a reference line labeled H that is parallel to the plane of the input surface and has a horizontal orientation in the view of Figures 2A, 2B, and following. Light from light guiding plate 10 is incident over a small range of angles about central input principal angle $\theta_{in}$. The output angle $\theta_{out}$ of the principal light ray delivered to the LC display element from the structured output surface of turning film 20 is determined by a number of factors including the central input principal angle $\theta_{in}$, the refractive index n of turning film 20, and the base angle β1 at which far surface 26 is slanted at an oblique angle relative to flat surface 22. Figure 2B corresponds to Figure 8 of U.S. Patent No. 6,027,220 when β1=52.3°, β2=75°, and n=1.58, or to Figure 9 of U.S. Patent No. 6,027,220 when β1=55.7°, β2=71.1°, and n=1.58.

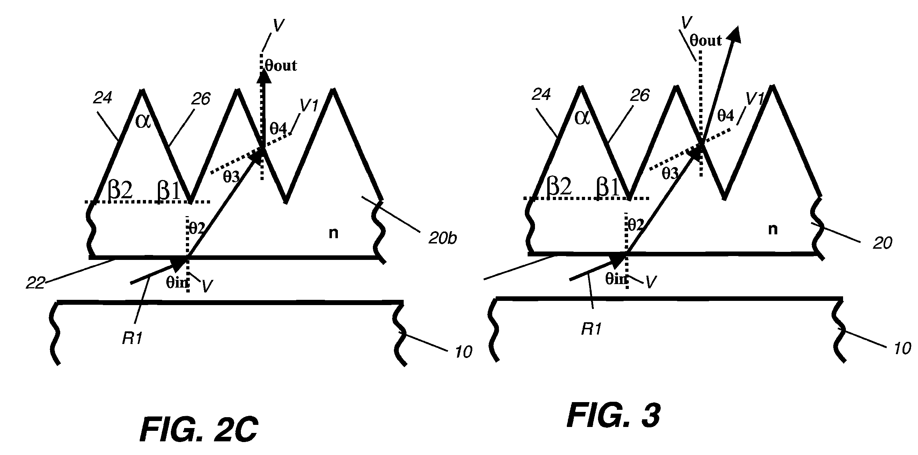

Figure 2C shows a polarizing turning film 20b in which prismatic structures face upwards, corresponding to Figure 2B of U.S. Patent No. 7,139,125 having the refractive index n> 1.6.

In Figures 2A -2C, the output angles of the turning films are optimized for normal direction. In Figure 2B and 2C, polarization contrast of light coming out of the turning films is intentionally enhanced.

Referring to Figure 3, key features of the improved turning film 20 of the present invention are shown. Light redirecting structures again face upward (more generally, facing outward toward the viewer and toward the LC device or other light modulator). Each light redirecting structure has a near surface 24 and a far surface 26, with reference to the location of light source 12 (Figure 1). Far surface 26 is the light emission or exit surface as was shown in Figure 2B. With the proper oblique slant (with respect to flat surface 22) given to far surface 26, incident light about a central illumination ray R1, also termed the principal ray, on flat surface 22 is suitably redirected toward the target angle, film normal direction V. In one embodiment, light redirecting structures are elongated linearly in an elongation direction along the surface of turning film 20, so that each light redirecting structure extends generally in a line from one edge of the output surface to another, with adjacent light-redirecting structures extended typically in parallel. With respect to cross-sectional view of Figure 3, the linear elongation direction is normal to the page. It can be appreciated that this arrangement has advantages for fabrication of turning film 20. However, there is no requirement that light redirecting structures be rigidly arranged in such an extended linear fashion. One important feature is the angular relationship of the various surfaces of the light redirecting structures relative to the angle of incident light from light guiding plate 10, the refractive index n of the turning film, and the angle of output light, as shown in the cross-sectional side view of Figure 3.

In embodiments of the present invention, target angle or output angle $\theta_{out}$ is determined by input angle $\theta_{in}$, refractive index n of the light redirecting structure, and far base angle $\beta_1$, as described by equation (1)

$$\theta_{out} = \beta_1 - \sin^{-1}\left\{ n\sin\left[ \beta_1 - \sin^{-1}(\frac{\sin(\theta_{in})}{n}) \right] \right\} \qquad \text{equation (1)}$$

The incident light from a light guiding plate is incident over a group of angles that are centered about a principal angle, so that most of the incident light is within +/-15 degrees of the principal angle. Equation (1) and subsequent equations use input angle $\theta_{in}$, as the principal angle.

It is instructive to note that equation (1) shows the relationship of $\theta_{out}$ to $\theta_{in}$ that applies generally for turning films using the type of upward-oriented or outward facing light redirecting structure shown in Figure 2B, Figure 2C and Figure 3, independent of any considerations of polarization. Additional polarization components, or a second turning film, may be necessary to improve polarization without further measures.

According to the comparative example shown in Figure 2B, the base angles β1, β2, refractive index n, and incident angle $\theta_{in}$ are selected to provide high transmission for light of one polarization, low transmission for light of another polarization, and β2=90° - $\theta_2$ , where $\theta_2$ is the refracted angle at input flat surface 22.

According to the comparative example shown in Figure 2C, all incident angles and refracted angles $\theta_{in}$ and $\theta_2$ at input flat surface 22 and $\theta_3$ and $\theta_4$ at far surface 26 are selected to be close to the respective Brewster's angle, thus providing some measure of polarization.

However, this Brewster's angular relationship is not necessary in Figure 3, showing some of the important features, angles, and surfaces of the turning film of the present invention. Each light-redirecting structure has far and near sides 26 and 24 as noted, each inclined upward from horizontal at a base angle β1 or β2, respectively. An apex angle α is formed where sides 24 and 26 intersect. Target or output angle $\theta_{out}$ is not centered about normal (V), but is skewed from normal so that 5 degrees $\leq \theta_{out} \leq$ 25 degrees. The turning film and the display incorporating this turning film are designed for avionics and automotive displays, and other types of displays, including point-of-sale displays, gaming displays and some desktop displays for data entry and review, as they are often viewed at angles between 5 degrees and 25 degrees. This is made possible by selecting proper base angles β1, β2, apex angle α, retractive index n, and incident angle $\theta_{in}$.

Three-Interface Turning Films

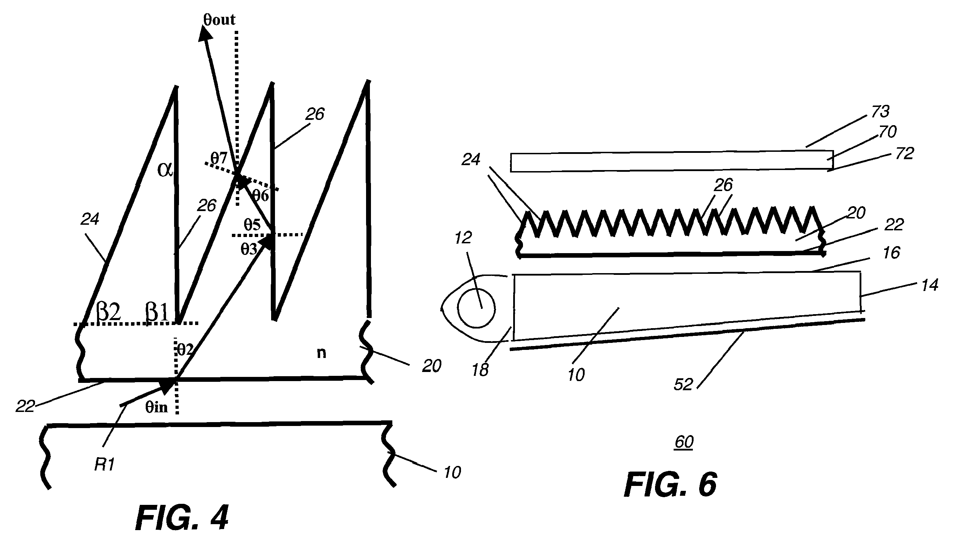

Referring next to Figure 4, there is shown another embodiment of the present invention, using linearly elongated light redirecting structures for providing a third interface for light within turning film 20. Here, light incident on far surface 26 is reflected using Total Internal Reflection (TIR), and is then incident at angle $\theta_6$ on near surface 24 where the refraction angle $\theta_7$ is not near the Brewster's angle. With the arrangement of Figure 4, the light path within turning film 20 includes three interfaces. The second interface does not employ the Brewster's angle. Instead, TIR occurs at the second interface.
Following the light path of Figure 4, incident light from light guiding plate 10, at angle $\theta_{in}$, is refracted at angle $\theta_2$. At far surface 26, the incident angle $\theta_3$ results in total internal reflection at angle $\theta_5$. The reflected light is incident at near surface 24 and refracted at angle $\theta_7$. The angle of output light $\theta_{out}$ is between 5 degrees and 25 degrees.
As an overriding consideration, in order to cause light to be incident on far surface 26 first, the following condition must be satisfied.

$$\beta_2 \geq 90^0 - \theta_2, \qquad\qquad \text{Equation (2)}$$

In order to cause light to go through near surface 24 without experiencing total internal reflection, the following condition must be satisfied.

$$\theta_7 < \theta_{TIR} = \sin^{-1}(\frac{1}{n}), \qquad\qquad \text{Equation (3)}$$

where

$$\theta_7 = 2\beta_1 + \beta_2 - \theta_2 - 180^0 = \ (2\beta_1 + \beta_2 - 180^0) - \sin^{-1}(\frac{\sin(\theta_{in})}{n}) \ \ \text{Equation (4)}$$

For the embodiment of Figure 4, the light redirecting structure elements themselves can be extended outward considerably with respect to the plane of a film or sheet on which these elements are formed. These could be separately fabricated components, mounted or affixed to a substrate, for example. Other possible modifications include applying a coating to far surface 26 for conditioning the behavior of light in some manner. For example, it might be advantageous to use a reflective coating instead of using TIR reflection. Alternately, far surface 26 could be configured to recycle light, such as light having an undesirable polarization state.

Structures Added to a Substrate

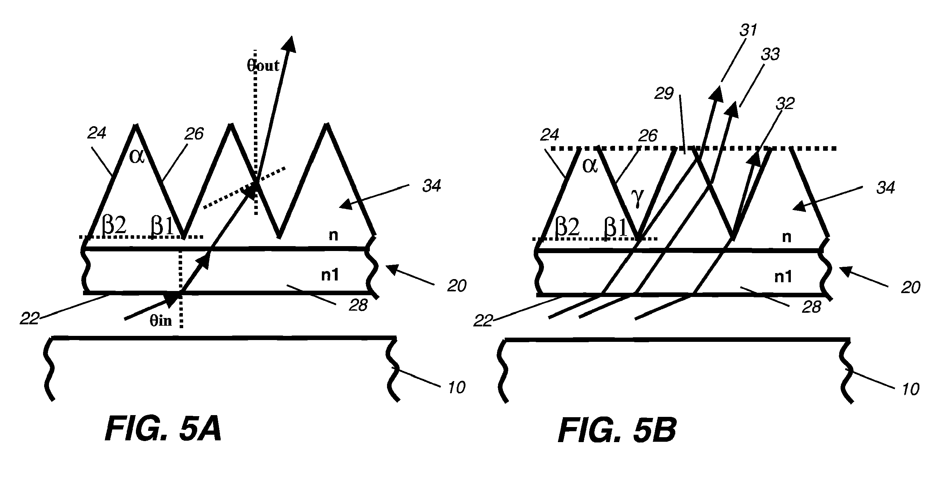

Figures 3 and 4 show turning film 20 formed from a single substrate. It may be more practical, however, to fabricate turning film 20 using more than one material, including the case where refractive indices of the materials used are the same or are different. Figure 5A is a cross-sectional view showing turning film 20 of Figure 3, wherein a substrate 28 and light redirecting structures 34 have different refractive indices n and *n1*. Here, substrate 28 provides a surface onto which light redirecting structures 34 are attached. Light redirecting structures 34 could be formed onto a separate sheet of a transparent medium which is then affixed to substrate 28. Alternately, light redirecting structures 34 could be separately fabricated and affixed to substrate 28.

Modifications to the basic shape of light redirecting structures may help to simplify fabrication or to change characteristics of the light path. For example, Figure 5B is a schematic cross-sectional view showing the turning film of Figure 5A, where the tips or apexes of light redirecting structures 34 are truncated (to the horizontal dotted line representing a truncated surface 29) and/or the groove angle γ between these structures is rounded. This is possible because the tips of the prisms near the apex are not used for the primary rays 31, 32, and 33 in Figure 5B.

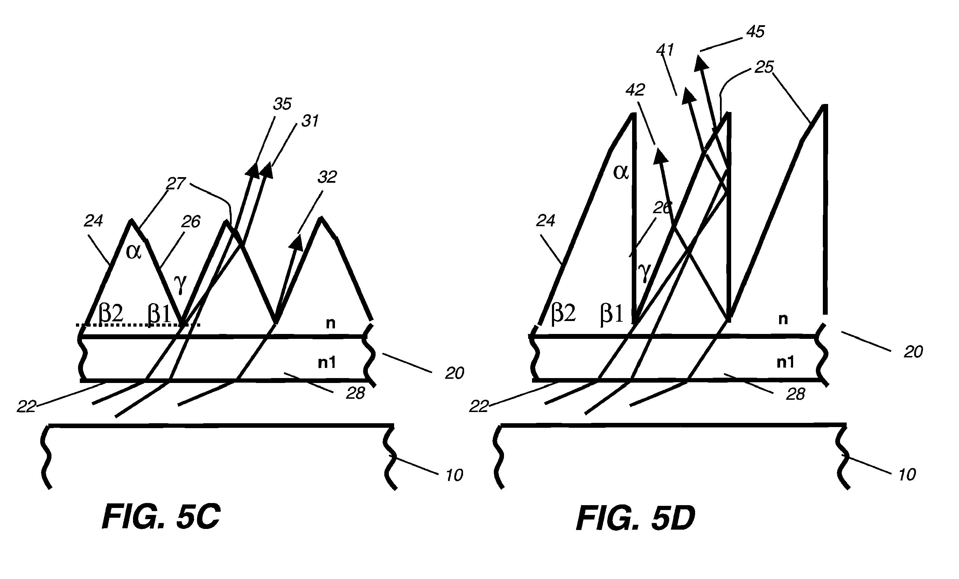

Similarly, Figure 5C is a schematic cross-sectional view showing the turning film of Figure 5A, where the far surface 26 has curved surface or an additional segment surface 27, which redirect secondary ray 43 toward the preferred direction, while primary rays 41, and 42 also go to the preferred direction through far surface 26.

Figure 5D is a schematic cross-sectional view showing the turning film of Figure 4 with a substrate having a different refractive index n1 and curved or additional segment surface 25 on the near surface 24. The tip of the prisms in Figure 5D can be truncated as well.

Embodiments of Figures 5A and 5D can have advantages in cost as well as fabrication. For example, some materials are easily available and may be most suitable for substrate 28. Materials of having index of refraction less than 1.60, desirably in the range 1.45-1.55 or even 1.47-1.52 may be better suited for use in providing light redirecting structures 34. By using a dual-material design, both cost reduction and high optical performance can be achieved. \

Display Apparatus and Orientation of Polarizers

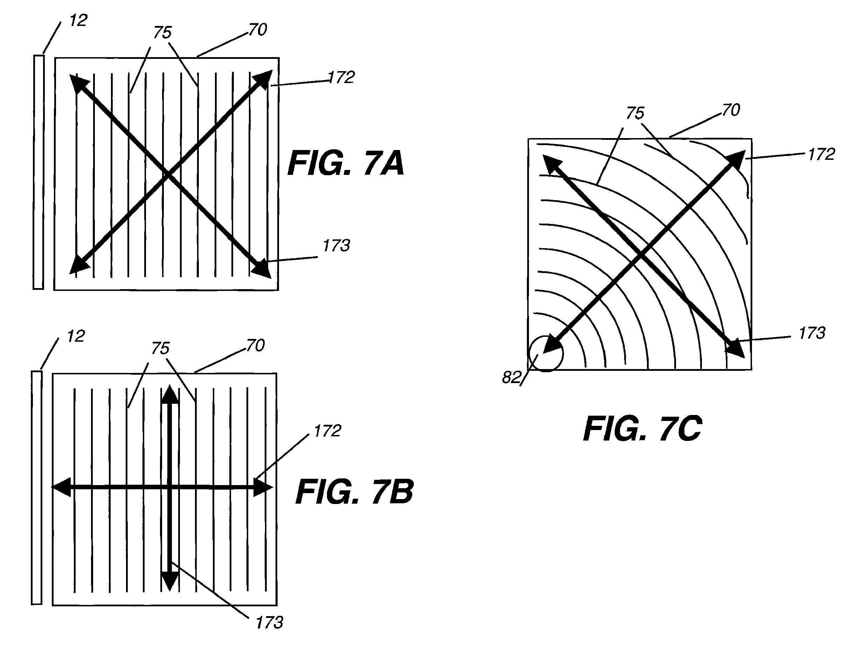

The apparatus and method of the present invention allow a number of possible configurations for support components to provide light for an LCD. Figure 6 is a schematic cross-sectional view showing a display apparatus 60 using turning film 20 according to the present invention. An LC spatial light modulator 70 modulates light received from light guiding plate 10 and turning film 20. A back polarizer 72 and a front polarizer 73 are provided for LC spatial light modulator 70. Figure 7A is a schematic top view showing polarized light transmission axes 172 and 173 for LC spatial light modulator 70, using a pair of polarizers that are oriented at 45 degrees relative to light redirecting structures 75 and grooves of turning film 20 that extend vertically in the view of Figure 7A. In this case, the LC spatial light modulator 70 can be a twisted nematic (TN) LCD, which is the dominant mode used in a notebook and monitor display. Advantageously, there is no need of a half wave plate as shown in Figure 6 of U.S. Patent No. 7,139,125 because the light output is optimized for un-polarized light, or the average of the P-polarization and S-polarization.

Figure 7B is a schematic top view showing polarized light transmission axes 172 and 173 for LC spatial light modulator 70, using a pair of polarizers oriented at parallel or perpendicular relative to the grooves and light redirecting structures 75 of turning film 20. In this case, the LC spatial light modulator 70 can use vertically aligned (VA) LCD or IPS LC elements. Rear polarizer transmission axis 172 is parallel to the plane of the cross section.

In one embodiment the display apparatus comprises a pair of crossed polarizers, wherein the light redirecting structures are elongated in an elongation direction and wherein each of the crossed polarizers is oriented either substantially parallel or perpendicular to the elongation direction of the light redirecting article. In another embodiment the display apparatus comprises a pair of crossed polarizers, wherein the light redirecting structures are elongated in an elongation direction and wherein the polarizers are substantially oriented at +/-45 degrees relative to the elongation direction of the light redirecting article.

As shown in Figure 7A, light redirecting structures 75 may be elongated in a linear direction and extend substantially in parallel. Figure 7C is a schematic top view showing turning film 20 with arcuately elongated light redirecting structures 75 in another embodiment. This arrangement is advantageous for employing a point light source such as Light Emitting Diode (LED) at one or more corners of light guiding plate 10 in order to have a more compact design. The rear polarizer transmission axis 172 is more or less parallel to the plane of the cross section.

Materials for Forming Turning Film 20

Turning film 20 of the present invention can be fabricated using polymeric materials having indices of refraction ranging typically from about 1.42 to about 1.64, and more preferably from about 1.47 to about 1.55. Possible polymer compositions include, but are not limited to: poly(methyl methacrylate)s, poly(cyclo olefin)s, polycarbonates, polysulfones and various co-polymers comprising various combinations of acrylate, alicyclic acrylate, carbonate, styrenic, sulfone and other moieties that are known to impart desirable optical properties, particularly high transmittance in the visible range and low level of haze. Various miscible blends of the aforementioned polymers are also possible material combinations that can be used in the present invention. The polymer compositions may be either thermoplastic or thermosetting. The former are manufacturable by an appropriate melt process that requires good melt processability while the latter can be fabricated by an appropriate UV cast and cure process or a thermal cure process.

Normalized peak intensity (or optical gain) and peak angle of a turning film

In general, light distribution is specified in terms of spatial and angular distributions. The spatial distribution of light can be made quite uniform, achieved by careful placement of micro features on top and/or bottom sides of a light guide plate. The angular distribution of light is specified in terms of luminous intensity $I$ as a function of polar angle $\theta$ and azimuthal angle. The angular distribution of light is measured with EZ Contrast 160 (available from Eldim, France). Polar angle $\theta$ is the angle between the light direction and the normal of the light guide plate V. The azimuthal angle is the angle between the projection of the light onto a plane that is perpendicular to the normal direction V and a direction that is parallel to the length direction of the light guide plate. The length direction of the light guide plate is perpendicular to the light source 12 and the normal direction V. The angular distribution of light can also be specified in terms of luminance $L$ as a function of polar angle $\theta$ and azimuthal angle. The luminance $L$ and the luminous intensity $I$ are related by $L=I/cos(\theta)$.

The peak intensity of a light distribution from a light guide plate is defined as the maximum luminous intensity. The peak angle of a light distribution is defined as the polar angle at which the peak luminous intensity occurs. Each luminous intensity distribution then defines a peak luminous intensity and a peak angle.

The normalized peak intensity, also referred as optical gain of a turning film, is defined as a ratio of the peak luminous intensity of the light that is transmitted through the turning film over the peak luminous intensity of the light that is emitted from a light guide plate. As a result, the normalized peak intensity of a turning film is not dependent upon the absolute level of the light source, but is primarily dependent upon the turning film design itself.

Thus, various turning film designs can be compared in terms of two critical quantities: normalized peak intensity (or optical gain) and peak angle of the light that is transmitted through the turning film.

Results for Example Embodiments

Figures 8A-8H show normalized peak intensity and peak angle values as functions of the refractive index n for fixed base angles $\beta1$ and $\beta2$, the apex angle $\alpha$ being 68°, 60°, 50°, 40°, 36°, 30°, 20°, 10°, respectively. In each of these graphs, the horizontal axis shows the refractive index n, which is in the range of 1.3 to 1.7. The left vertical axis is the measure of the peak intensity (represented by empty diamonds) relative to the input light peak intensity. The right vertical axis is the measure of the peak angle (represented by the filled squares) relative to the normal V of the display. The incident angle of the principle rays from the light guide plate is around 70 degrees.

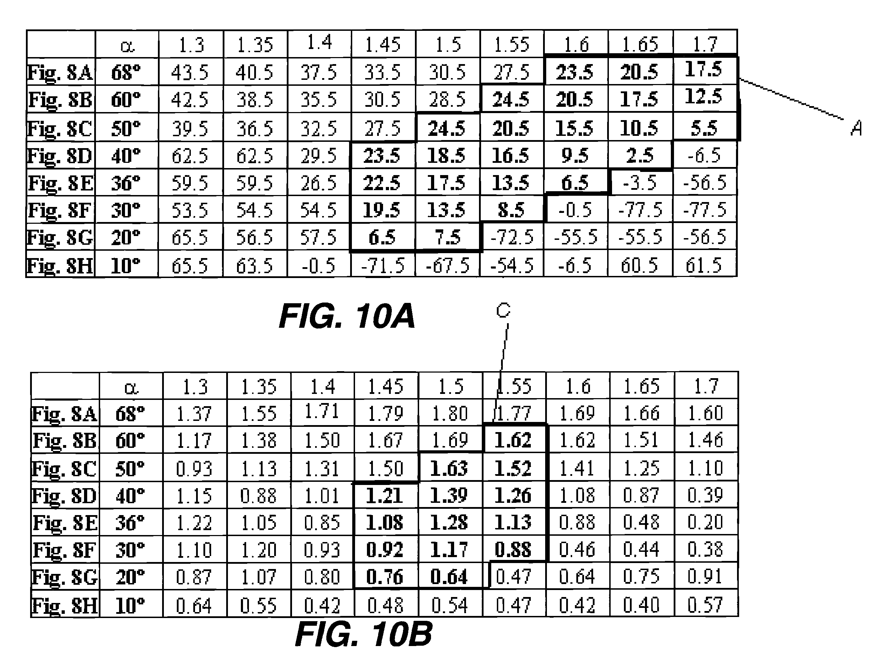

Figure 10A shows a table that lists apex $\alpha$ angles, refractive indices, and peak angle values calculated for turning film embodiments of the present invention given in Figures 8A-8H. The acceptable range of peak angle values is outlined in bold and labeled A in Figure 10A. Values within area A are similarly outlined in Figures 8A-8H.

Figure 10B gives a table that lists apex $\alpha$ angles, refractive indices, and normalized peak intensity values for the embodiments of Figures 8A-8H. The desired range of peak intensity values is outlined in bold and labeled C in Figure 10B. Values within area C are similarly outlined in Figures 8A-8H.

It can be seen from Figures 8A-8H and corresponding tables in Figures 10A and 10B that there are workable solutions for turning films having structures and refractive indices n within a certain range. Workable solutions are given in the areas of intersection of A, B, and C. These results indicate that an acceptable turning film having a range of output angles from about 5 to 25 degrees can be provided having an apex angle $\alpha$ that lies between 60 and 20 degrees, preferably in the range from 50 to 35 degrees, because relatively high intensity output can be achieved with materials having an index of refraction between about 1.45 and 1.55. An index of refraction of between about 1.45 and 1.55 allows the use of a number of more conventional optical plastics. The preferable range for refractive index is in the range from about 1.47 to 1.52.

In some embodiments, base angles $\beta1$ and $\beta2$ are equal. Where these angles are unequal, turning film 20 can alternately be rotated in orientation, within the same plane, 180 degrees from its original position. As shown in Figures 9A and 9B, turning film 20 is disposed in one position when incident light is at principal angle $\theta_{in1}$ and is rotated 180 degrees within the same incident plane when incident light is at principal angle $\theta_{in2}$. When this rotation is done, the functions of near surface 24 and far surface 26 change appropriately.

Thus, the present invention provides a low cost turning film solution that uses lower-index optical polymers.

The invention has been described in detail with particular reference to certain preferred embodiments thereof, but it will be understood that variations and modifications can be effected within the spirit and scope of the invention. The patents and other publications mentioned herein are incorporated herein by reference.

## PARTS LIST

| 1, 2, 3, 4. | Area |
|---|---|
| 10. | Light guiding plate |
| 12. | Light source |
| 14. | End surface |
| 16. | Output surface |
| 18. | Input surface |
| 20, 20a, 20b. | Turning film |
| 22. | Flat surface |
| 24. | Near surface |
| 25. | Segment surface |
| 26. | Far surface |
| 27. | Segment surface |
| 28. | Substrate |
| 29. | Truncated surface |
| 31, 32, 33, 35. | Rays |
| 34. | Light redirecting structure |
| 41, 42, 43, 45. | Rays |
| 52. | Reflective surface |
| 60. | Display apparatus |
| 70. | LC spatial light modulator |
| 72. | Rear polarizer |
| 73. | Front Polarizer |
| 75. | Light redirecting structure |
| 82. | Point light source |
| 100. | Display apparatus |
| 120. | Light gating device |
| 122. | Turning film |
| 124. | Polarizer |
| 125. | Reflective polarizer |
| 142. | Reflective surface |
| 172, 173. | Transmission axes |
| $\alpha$. | Apex angle |
| $\beta 1$. | base angle |
| $\beta 2$. | base angle |
| $\gamma$. | groove angle |
| n. | Refractive index |
| $\theta_{in1}$. | Incident angle for a first light guide plate |
| $\theta_{in2}'$. | Incident angle for a second light guide plate |

| $\theta_{out}$. | Output or target angle |
|---|---|
| $\theta 2$. | Refracted angle at the flat surface |
| $\theta 3$. | Incident angle at the far surface |
| $\theta 4$. | Refracted angle at the far surface |
| $\theta 5$. | Reflected angle at the far surface |
| $\theta 6$. | Incident angle at the near surface |
| $\theta 7$. | Refracted angle at the near surface |

| V. | Film normal direction |
|---|---|
| V1. | Normal direction on the far surface |
| V2. | Normal direction on the near surface |
| H. | Horizontal direction |
| R1. | Central illumination ray |

**Claims**

1. A light redirecting article for redirecting light toward a target angle, the light redirecting article comprising:

(a) an input surface for accepting incident illumination over a range of incident angles;

(b) an output surface comprising a plurality of light redirecting structures each light redirecting structure having:

(i) an exit surface sloping away from normal in one direction as defined by a first base angle ß1 relative to the input surface; and

(ii) a second surface sloping away from normal, in the opposite direction relative to the exit surface, as defined by a second base angle ß2 relative to the input surface;

wherein the first and second surfaces are opposed to each other at an angle $\alpha$ that is in the range from 35 to 55 degrees;

wherein the light redirecting article is formed from a material having an index of refraction less than 1.60; and

wherein the target angle $\theta_{out}$ is in range from 5 to 25 degrees.

2. The light redirecting article of claim 1 wherein first and second base angles are substantially equal.

3. The light redirecting article of claim 1 comprising a material having a refractive index in the range of from 1.45 to 1.55.

4. The light redirecting article of claim 1 wherein the light redirecting article is fabricated from at least two materials having different indices of refraction.

5. The light redirecting article of claim 1 wherein for at least one of the exit and second exit surfaces, there is more than one slope.

6. The light redirecting article of claim 1 wherein there is curvature over at least some portion of at least one of the exit and second exit surfaces.

7. The light redirecting article of claim 1 wherein at least one light redirecting structure is truncated.

8. The light redirecting article of claim 1 wherein the light redirecting article can be utilized with two different light guide plates having two different principal angles of incident illumination.

9. The light redirecting article of claim 1 wherein the target angle is in the range of from 10 to 20 degrees from normal.

10. The light redirecting article claim 1 wherein the plurality of the light redirecting structures are substantially parallel and extend from one edge of the output surface to the other.

**FIG. 1**

EP 2 003 475 A2

FIG. 2B

FIG. 2A

**FIG. 2C**

**FIG. 3**

EP 2 003 475 A2

EP 2 003 475 A2

**FIG. 4**

_60_

**FIG. 6**

**FIG. 5A**

**FIG. 5B**

EP 2 003 475 A2

FIG. 5C

FIG. 5D

**FIG. 7C**

**FIG. 7A**

**FIG. 7B**

FIG. 8A

FIG. 8B

18

FIG. 8D

FIG. 8C

**FIG. 8E**

**FIG. 8F**

Peak intensity
Peak angle

20

FIG. 8G

FIG. 8H

20

θ_{in1}

A

10

**FIG. 9A**

20

A

θ_{in2}

10

**FIG. 9B**

| | α | 1.3 | 1.35 | 1.4 | 1.45 | 1.5 | 1.55 | 1.6 | 1.65 | 1.7 |
|---|---|---|---|---|---|---|---|---|---|---|
| Fig. 8A | 68° | 43.5 | 40.5 | 37.5 | 33.5 | 30.5 | 27.5 | **23.5** | **20.5** | **17.5** |
| Fig. 8B | 60° | 42.5 | 38.5 | 35.5 | 30.5 | 28.5 | **24.5** | **20.5** | **17.5** | **12.5** |
| Fig. 8C | 50° | 39.5 | 36.5 | 32.5 | 27.5 | **24.5** | **20.5** | **15.5** | **10.5** | **5.5** |
| Fig. 8D | 40° | 62.5 | 62.5 | 29.5 | **23.5** | **18.5** | **16.5** | 9.5 | 2.5 | -6.5 |
| Fig. 8E | 36° | 59.5 | 59.5 | 26.5 | **22.5** | **17.5** | **13.5** | **6.5** | -3.5 | -56.5 |
| Fig. 8F | 30° | 53.5 | 54.5 | 54.5 | **19.5** | **13.5** | **8.5** | -0.5 | -77.5 | -77.5 |
| Fig. 8G | 20° | 65.5 | 56.5 | 57.5 | **6.5** | **7.5** | -72.5 | -55.5 | -55.5 | -56.5 |
| Fig. 8H | 10° | 65.5 | 63.5 | -0.5 | -71.5 | -67.5 | -54.5 | -6.5 | 60.5 | 61.5 |

A

## FIG. 10A

| | α | 1.3 | 1.35 | 1.4 | 1.45 | 1.5 | 1.55 | 1.6 | 1.65 | 1.7 |
|---|---|---|---|---|---|---|---|---|---|---|
| Fig. 8A | 68° | 1.37 | 1.55 | 1.71 | 1.79 | 1.80 | 1.77 | 1.69 | 1.66 | 1.60 |
| Fig. 8B | 60° | 1.17 | 1.38 | 1.50 | 1.67 | 1.69 | **1.62** | 1.62 | 1.51 | 1.46 |
| Fig. 8C | 50° | 0.93 | 1.13 | 1.31 | 1.50 | **1.63** | **1.52** | 1.41 | 1.25 | 1.10 |
| Fig. 8D | 40° | 1.15 | 0.88 | 1.01 | **1.21** | **1.39** | **1.26** | 1.08 | 0.87 | 0.39 |
| Fig. 8E | 36° | 1.22 | 1.05 | 0.85 | **1.08** | **1.28** | **1.13** | 0.88 | 0.48 | 0.20 |
| Fig. 8F | 30° | 1.10 | 1.20 | 0.93 | **0.92** | **1.17** | **0.88** | 0.46 | 0.44 | 0.38 |
| Fig. 8G | 20° | 0.87 | 1.07 | 0.80 | **0.76** | **0.64** | 0.47 | 0.64 | 0.75 | 0.91 |
| Fig. 8H | 10° | 0.64 | 0.55 | 0.42 | 0.48 | 0.54 | 0.47 | 0.42 | 0.40 | 0.57 |

C

## FIG. 10B

EP 2 003 475 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5592332 A, Nishio
- US 6111696 A, Allen
- US 6280063 B, Fong
- US 6746130 B, Ohkawa
- US 5982540 A
- US 6172809 A
- US 6027220 A
- US 6079841 A
- US 7139125 B